Europäisches Patentamt

European Patent Office

Office européen des brevets

(19)

(11) Numéro de publication : **0 210 095**
**B1**

(12) **FASCICULE DE BREVET EUROPÉEN**

(45) Date de publication du fascicule du brevet :
**30.08.89**

(21) Numéro de dépôt : **86401375.0**

(22) Date de dépôt : **23.06.86**

(51) Int. Cl.⁴ : **B 26 D   1/46// B23D55/02**

(54) Dispositif de découpe de feuilles de matière plastique.

(30) Priorité : 25.06.85 FR 8509627

(43) Date de publication de la demande :
28.01.87 Bulletin 87/05

(45) Mention de la délivrance du brevet :
30.08.89 Bulletin 89/35

(84) Etats contractants désignés :
BE DE FR GB IT SE

(56) Documents cités :
EP–A– 0 126 912
DE–B– 1 147 374
FR–A– 2 118 817
FR–A– 2 510 029
GB–A– 2 144 363
US–A– 4 491 047

(73) Titulaire : SAINT-GOBAIN VITRAGE
"Les Miroirs" 18, avenue d'Alsace
F-92400 Courbevoie (FR)

(72) Inventeur : Gilli, Luigi
Residence Via Carducci, 4
Luserna S. Giovanni (Turin) (IT)
Inventeur : Guglielmetti, Giorgio
Corso Italia 42
Mondovi (Cuneo) (IT)
Inventeur : Carossio, Guido
Via Filadelfia, 132
Turin (IT)

(74) Mandataire : Muller, René et al
SAINT-GOBAIN RECHERCHE 39, quai Lucien Lefranc
F-93304 Aubervilliers (FR)

Jouve, 18, rue St-Denis, 75001 Paris, France

## Description

La présente invention est relative à la découpe de feuilles ou films formés d'une ou plusieurs couches de matière plastique, notamment à la découpe de feuilles transparentes ou translucides, susceptibles d'être utilisées dans la fabrication des vitrages feuilletés. Plus particulièrement, l'invention est relative à un dispositif pour la découpe de ces feuilles, temporairement ou définitivement assemblées avec les autres éléments du vitrage, par un détourage.

Dans la fabrication de vitrages feuilletés, notamment de vitrages de sécurité formés de deux feuilles de verre et d'une feuille ou couche intercalaire en matière plastique, par exemple en polyvinylbutyral ou en polyuréthane, les éléments constitutifs du vitrage sont assemblés par empilement des éléments, suivi d'un calandrage par passage de l'empilage entre des rouleaux presseurs, et d'un cycle d'autoclave.

Au moment de l'empilement des éléments, la feuille de matière plastique intercalaire se présente sous la forme d'un primitif généralement trapézoïdal dont le format est légèrement plus grand que celui du vitrage.

Après l'empilement, et avant le calandrage, les parties de la feuille intercalaire qui débordent du vitrage sont découpées manuellement par détourage à l'aide d'une lame métallique, l'ouvrier qui exécute cette découpe maintenant la lame appuyée contre le chant du vitrage. C'est une opération de main d'œuvre longue et coûteuse. En outre, elle se révèle quelquefois peu précise et il est alors nécessaire d'ebarber, généralement après le cycle d'autoclave, les parties de l'intercalaire qui débordent encore du vitrage. Un autre inconvénient de cette découpe manuelle est que l'outil risque d'attaquer par endroits les bords des feuilles de verre et de fragiliser ainsi le vitrage. Enfin, les lames utilisés s'usent très rapidement, et il est indispensable d'en changer souvent.

Des dispositifs de découpe automatique ont déjà été décrits, par exemple dans la publication du brevet français 2 510 029.

On connaît aussi d'après le document GB-A-2 144 363 une tête de découpe pour le détourage des vitrages feuilletés, munie d'un ruban à bord tranchant en forme de lame de scie à ruban, la tête de découpe étant montée au bout d'un bras connecté à des moyens d'entraînement.

L'invention propose un dispositif amélioré de découpe, entièrement automatique, parfaitement fiable, pouvant facilement s'intégrer dans les lignes de fabrication des vitrages feuilletés.

Le dispositif selon l'invention comprend une tête de découpe munie d'un ruban à bord tranchant en forme de lame de scie à ruban, caractérisé en ce que la tête de découpe est montée sur un axe de rotation horizontal, lui-même monté au bout d'une colonne verticale montée tournant autour d'un axe vertical z, sur une colonne principale pouvant se déplacer selon les trois axes cartésiens orthogonaux x, y, z, en étant montée coulissante verticalement selon l'axe z sur une structure pouvant se déplacer selon les deux axes x et y, et en ce que l'ensemble du dispositif est commandé et contrôlé par des moyens électroniques et numériques.

La tête de découpe selon l'invention peut donc se déplacer selon trois axes cartésiens orthogonaux, et en outre selon deux axes orthogonaux de rotation.

Dans une réalisation avantageuse du dispositif de découpe, il est prévu des moyens commandant automatiquement et périodiquement le changement de la lame de découpe.

D'autres avantages et caractéristiques de l'invention apparaîtront dans la description suivante d'un exemple de réalisation du dispositif de découpe, faite en relation avec les figures.

La figure 1 est une vue d'ensemble du dispositif de découpe.

La figure 2 est une vue latérale du dispositif représenté sur la figure 1.

La figure 3 est une vue latérale, partielle, de la tête de découpe illustrée dans les figures 1 et 2.

La figure 4 est une vue de dessus de la tête de découpe de la figure 3.

La figure 5 est une vue partielle, en coupe, selon le plan de tracés 5.5. de la tête de découpe de la figure 4.

La figure 6 est une vue partielle, en coupe, selon le plan de tracés 6.6. de la tête de découpe de la figure 5.

La figure 7 est une vue frontale d'un équipement du dispositif de découpe de la figure 1.

La figure 8 est une vue partielle, en coupe, selon le plan de tracés 8.8. de l'équipement de la figure 7.

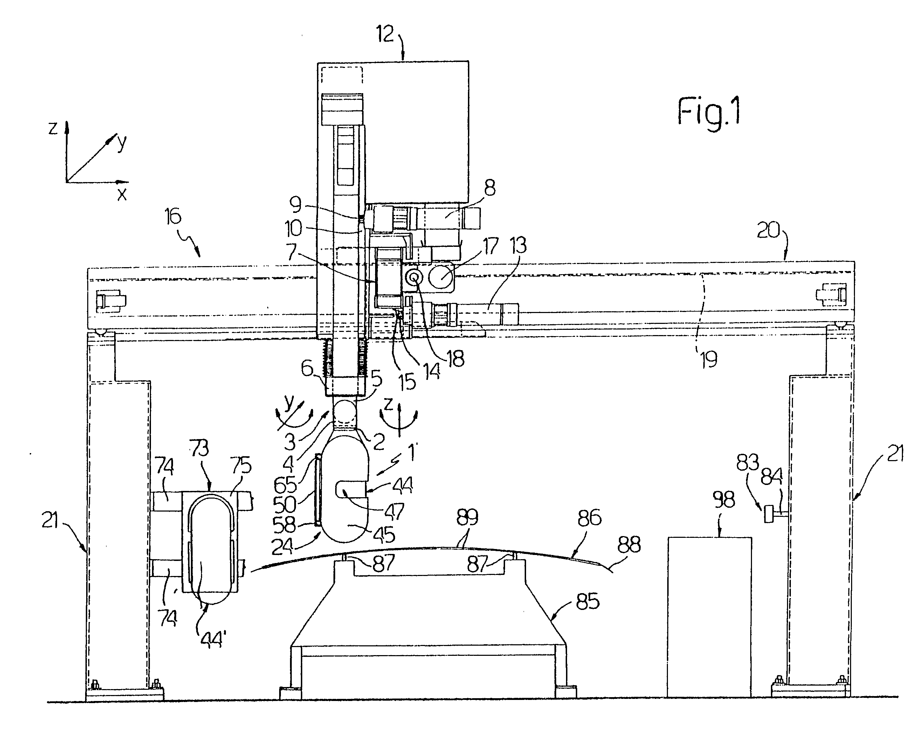

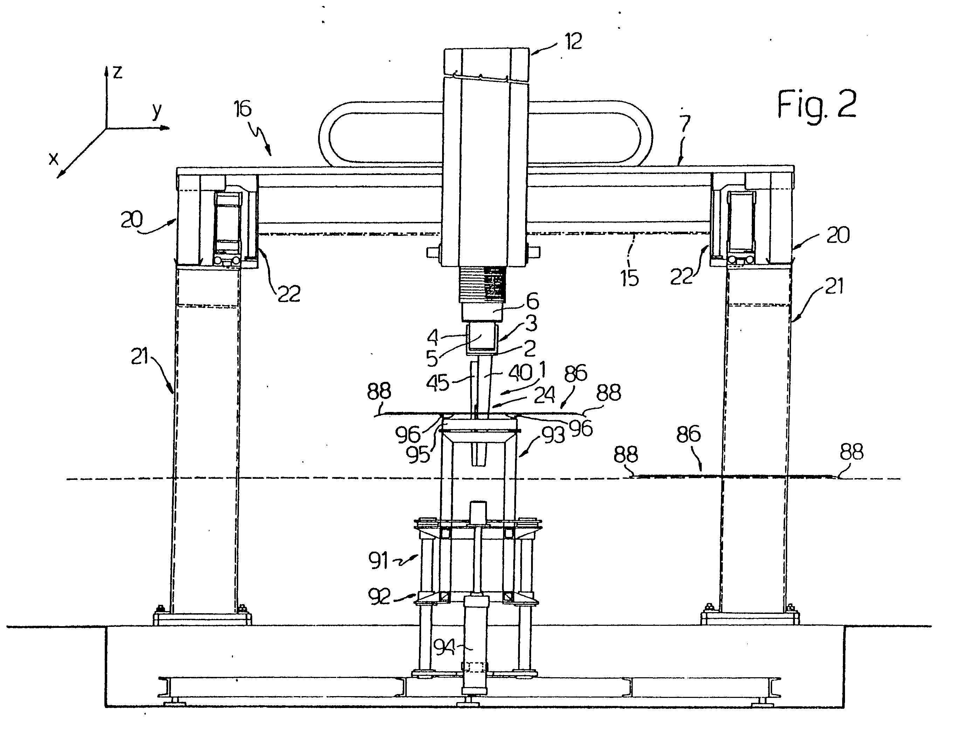

Comme représentée sur les figures 1 et 2, la tête de découpe 1 présente une plaque supérieure 2, reliée à un axe de rotation 3, permettant une rotation de cette plaque 2 autour de l'axe y (dans les figures 1 et 2, on représente les axes ternaires cartésiens orthogonaux x, y et z, pour la référence des mouvements qui seront décrits plus loin). En particulier, la plaque 2 est reliée à une fourche 4 en forme de U, montée sur un axe à l'extrémité inférieure d'une colonne interne 5 d'une colonne verticale principale 6, disposée d'après l'axe z. La colonne 5 peut tourner autour de l'axe z, par rapport à la colonne 6, par l'intermédiaire de mécanismes de commande et de contrôle de la position du type déjà cité. La colonne 6 peut se mouvoir verticalement, par rapport à une poutre horizontale 7, disposée d'après l'axe y, grâce à un moteur 8, solidaire d'une structure 12 appuyée sur la poutre 7, qui présente un pignon de sortie 9 s'engrenant à une crémaillère 10 fixée à la colonne 6. La structure 12 fixée à la poutre 7, et abritant la colonne à glissière verticale 6, dispose d'autre part d'un mécanisme, non représenté, de contrebalancement du poids de la colonne 6.

La structure 12, comme représentée sur la figure 1, est aussi reliée à un moteur 13 d'entraînement de la structure 12, selon l'axe y.

En particulier, un tel moteur 13 présente un pignon de sortie 14, qui engrène avec une crémaillère 15 fixée au-dessous de la poutre 7. Sur la poutre 7 est porté à son tour un moteur 17 qui commande le déplacement de la poutre 7 d'après l'axe x, et qui présente un pignon de sortie 18 qui engrène avec une crémaillère 19 fixée vers la zone supérieure d'une poutre 20 placée d'après l'axe x et soutenue aux extrémités de 2 colonnes verticales 21. Des chariots 22 entraînent par roulement la poutre horizontale 7 sur les poutres perpendiculaires 20.

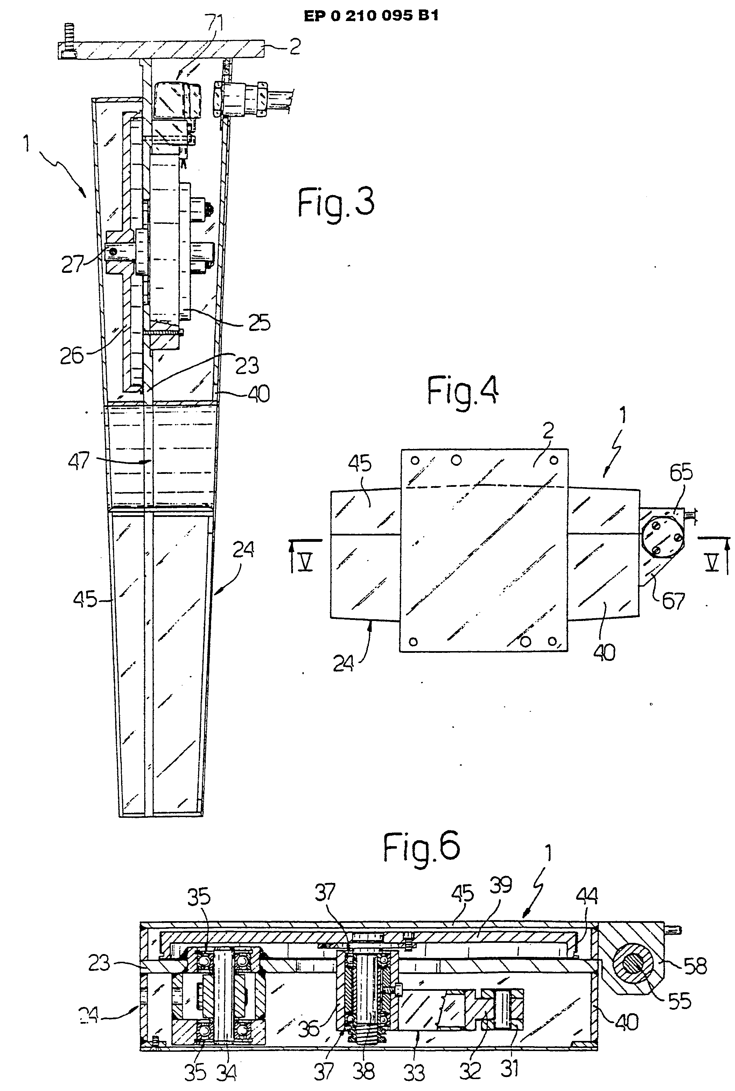

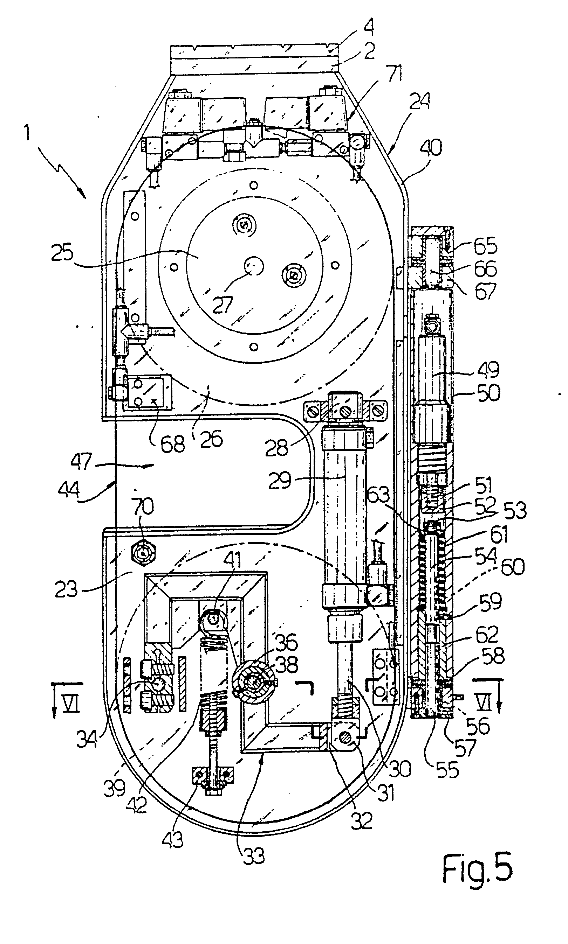

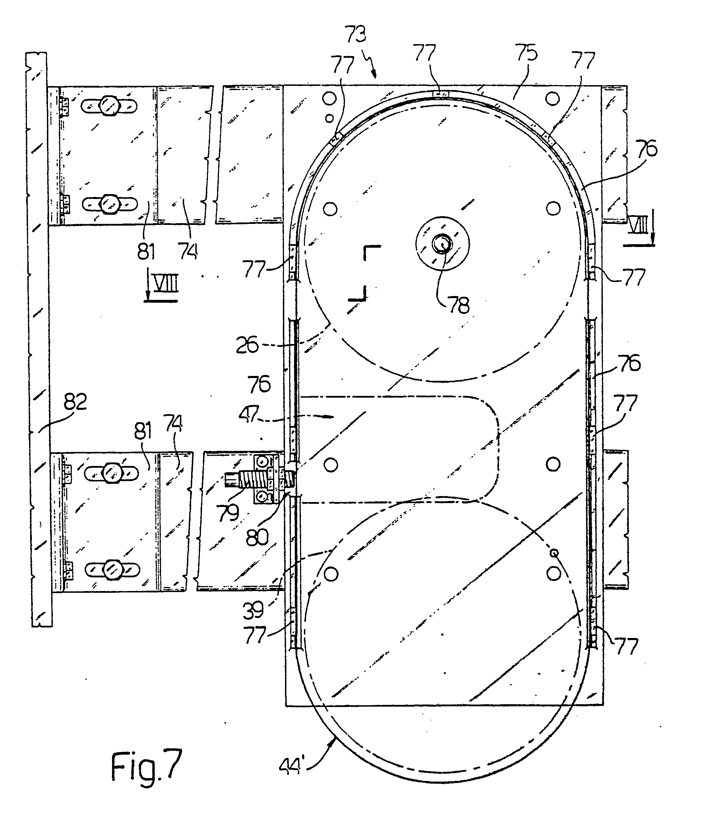

Sur les figures 3 à 6, la tête de découpe 1 présente une partie principale 24, avec une partie 40 en forme de boîte ouverte en partie latéralement, fixée à la plaque supérieure 2. Cette partie 40 sur une de ses parois internes 24, porte un moteur 25, fixé au-dessus, qui commande la rotation, par l'intermédiaire d'un axe 27, d'une poulie 26 qui sort de cette partie 24. Dans la zone centrale de la partie 40, comme représentée sur la fig. 5, est montée sur un axe, une extrémité 28 d'un vérin d'actionnement 29, qui présente une tige 30 ayant une extrémité 31 montée sur un axe à une extrémité 32 d'un corps tubulaire profilé 33, qui, à l'autre extrémité, est fixé sur un pivot 34 porté grâce à 2 coussinets d'extrémité, est fixé sur un pivot 34 porté grâce à 2 coussinets d'extrémité 35, par la poutre 40 (fig. 6). Au centre, le corps tubulaire profilé 33 est relié à un pallier 36 qui, par l'intermédiaire de roulements à billes 37, porte un pivot 38 de support fou pour une poulie 39, elle aussi disposée à l'extérieur de la partie 40.

Comme représentée sur la fig. 5, au corps tubulaire profilé 33 est fixée une goupille 41, à laquelle est accrochée une extrémité d'un ressort de traction 42, qui, à l'autre extrémité, est lié à un support 43 fixé à la partie 40. Entre les 2 poulies 26, 39 est placée une lame de découpe 44, métallique, en forme de ruban, à bords tranchants, laquelle est mise sous tension par l'intermédiaire du système de commande du vérin de fonctionnement 29, et ce d'une façon qui sera décrite plus en détail par la suite. Cette lame de découpe 44 est enfermée dans la tête 1, par un couvercle 45, qui présente une ouverture 47, profilée en U, qui découvre une portion de la lame de découpe 44 avec laquelle vient en contact l'élément à découper.

Le mouvement d'ouverture et de fermeture du couvercle 45, se produit par l'intermédiaire d'un vérin 49 qui est logé, comme représenté sur la figure 5, dans une portion cylindrique 50 fixée latéralement à la partie 40. En particulier, un tel vérin 49 présente une tige mobile 51 avec une tête 52 qui, par déplacement linéaire, peut agir sur une extrémité 53 d'un poussoir 54, ayant une partie inférieure 55 pourvue d'une cannelure hélicoïdale 56, avec laquelle coopère une goupille 57 portée par une partie 58 qui, comme représenté sur la figure 6, est reliée à une extrémité latérale du couvercle 45, dans la zone inférieure.

Dans la partie cylindrique 50 est en outre fixée une goupille 59 qui se loge dans une cannelure verticale 60 de la partie supérieure du poussoir 54, pour empêcher la rotation de celle-ci autour de son axe. Autour de cette partie supérieure du poussoir 54, est disposé un ressort cylindrique 61, s'appuyant par son extrémité inférieure sur une bague 62, fixée entre la partie 50 et disposée coaxialement au poussoir 54, alors que la partie supérieure du ressort 61 s'appuie contre une rondelle 63 fixée à l'extrémité 53 du poussoir 54. Dans la zone latérale supérieure du couvercle 45, est fixée une partie 65, coaxiale à la partie inférieure 58, et disposée sur un pivot 66 qui est guidé par une partie 67 fixée latéralement à la partie 40. Au dessus de l'ouverture 47, dans la partie 40, est fixée une plaque magnétique 68, garantissant la fermeture du couvercle 45. Sur la partie 40 se trouve également un détecteur de proximité 70 qui relève la position de fermeture et d'ouverture de ce couvercle 45.

Dans la partie supérieure de la partie 40, se trouvent logés divers éléments 71 distributeurs du fluide de fonctionnement pour les vérins 29 et 49.

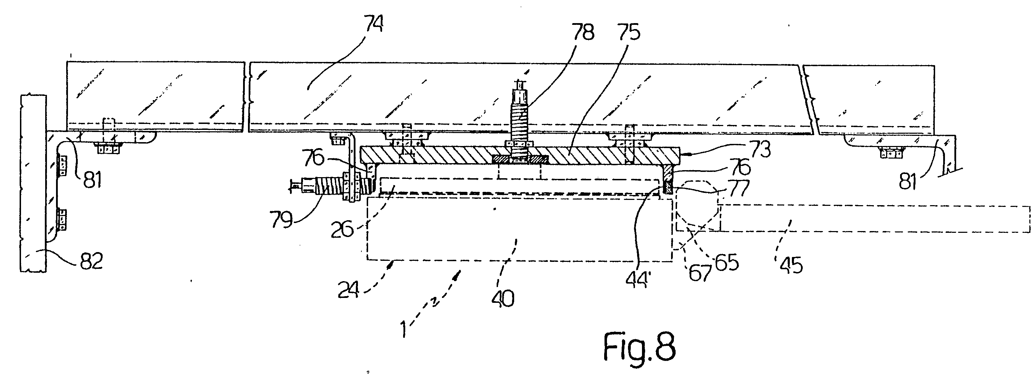

Sur les figures 7 et 8, est illustré un équipement 73 pour le changement automatique de la lame de découpe 44, lequel comprend deux traverses 74 parallèles, portant une plaque 75, sur lesquelles sont fixées des barettes semi-circulaires de dimensions légèrement plus grandes que celles que la lame de découpe 44 est amenée à prendre quand elle se trouve entre les deux poulies 26 et 39, dans la tête de découpe 1. Sur ces barettes 76 sont disposés des aimants 77 sur lesquels on dispose une lame de découpe 44 de rechange. Dans la partie supérieure de la plaque 75 en correspondance avec la zone dans laquelle se présente l'arbre 27 de la poulie 26 de la tête de découpe 1, pour le changement de la lame de découpe qu'on décrira plus loin et ainsi que représenté par des lignes hachurées sur les figures 7 et 8, est disposé un détecteur de proximité 78. Un autre détecteur de proximité 79 servant à détecter la présence d'une lame de rechange 44, est fixé à la traverse inférieure 74.

Les deux traverses 74 sont fixées, à leurs extrémités respectives, à des équerres 81 avec une possibilité de réglage pour la position longitudinale ; ces équerres sont fixées à leur tour aux colonnes de soutien 82 partiellement représentées, elles-mêmes fixées aux colonnes 21, dans une zone accessible à la tête de découpe 1.

Un équipement 83 d'affûtage pour la lame de découpe 44 est représenté sur la figure 1. Il comprend une meule d'affûtage et il est soutenu par un support 84 qui est placé dans une zone entre les colonnes 21, accessible à la tête de découpe 1. Entre les colonnes 21, parallèlement à la direction de la traverse horizontale 7 est placé un équipement de transport 85 pour les vitrages 86, qui doivent être découpés. En particulier, cet équipement de transport 85 peut comprendre des chariots transporteurs avec plusieurs rangées de picots 87 parallèles à la ligne de transport qui soutiennent ces vitrages 86 constitués de deux feuilles de verre 89, entre lesquelles est placée une feuille 88 de plus grande dimension, en matière plastique, notamment en polyvinylbutyral, qui, de cette façon, déborde des feuilles de verre 89 et qui doit être découpée à l'aide de la tête de découpe 1 objet de la présente invention, par un détourage du vitrage.

Sur la figure 2, sont indiquées, en lignes hachurées, les rangées de picots 87 de l'équipement de transport 85 pour les vitrages 86. Entre les colonnes 21 est prévu un équipement 91 de prélèvement du vitrage 86 de l'équipement de transport 85. Cet équipement 91 présente un cadre de base 92 et une partie centrale 93 qui peut se soulever par l'intermédiaire d'un vérin de fonctionnement 94 et qui présente un plan supérieur 95 avec des ventouses 96 d'appui sous le vitrage 86.

Les divers mouvements de déplacement ou de rotation pour la tête de découpe 1 sont dictés par un microprocesseur 98 qui commande et contrôle les opérations liées au fonctionnement du dispositif.

Le fonctionnement de la tête de découpe 1 et des équipements relatifs complémentaires est le suivant : le vitrage 86 muni de la feuille 88 à découper par détourage, est transporté à partir de l'équipement de transport 85 jusqu'à l'équipement 91 qui, commandé par le centre de commande 98, le place en position soulevée par rapport à l'équipement de transport 85 tel qu'illustré dans la figure 2 pour la découpe. Pour cette opération, le centre 98 commande le déplacement de la tête de découpe 1 avec un contrôle de déplacement sur 5 axes (3 de déplacement et 2 de rotation), pour faire ainsi suivre le bord du vitrage 86 avec la zone de la lame de découpe 44 qui passe dans l'ouverture 47. Cette lame de découpe 44 est entraînée par la poulie 26 qui est actionnée par le moteur 25. La lame est maintenue en tension entre la poulie 26 et la poulie 39 par l'action du ressort 42 qui fait tourner, dans le sens des aiguilles d'une montre, le corps tubulaire profilé 33 qui soutient le pivot 34.

A la fin de la phase de découpe de la partie débordante du vitrage 86 de la feuille 88 à découper, l'équipement 91 par l'intermédiaire de la descente du vérin 94 replace le vitrage 86 sur le transporteur 85 qui l'envoie aux phases de travail suivantes.

Bien entendu, le parcours de la tête de découpe 1 avec la lame de découpe 44 autour du bord du vitrage 86 à découper peut être contrôlé par le centre de commande 98 après qu'il ait réalisé un premier parcours pour établir son programme.

Après un certain nombre de cycles de découpe des vitrages 86, le centre de commande 98 peut contrôler automatiquement l'approche de la tête de découpe 1 et par conséquent de la lame de découpe 44 à l'équipement 83 pour l'affûtage du bord tranchant de la lame de découpe 44.

Après un nombre préfixé de cycles de découpe, la tête de découpe 1 vient automatiquement se présenter à l'équipement 73 pour effectuer, de façon automatique, l'opération de changement de la lame 44. Le couvercle 45 de la partie 40 s'ouvre par l'intermédiaire du vérin 54 qui, grâce à la rainure hélicoïdale 56 de la partie inférieure 55 détermine la rotation de la goupille 57 insérée dans cette rainure 56 et donc la rotation de la partie 58 à laquelle est attachée la goupille 57 ; la partie 58 reliée au couvercle 45 fait donc tourner le couvercle 45 qui se place dans la configuration hachurée et ouverte, qui est illustrée dans la figure 8.

La lame de découpe 44 usée peut être retirée par l'intermédiaire du fonctionnement du vérin 29 qui, en retirant la tige 30 exerce une rotation antérieure sur le corps tubulaire profilé 33 autour du pivot 34 et en opposition à la force élastique du ressort 42 pour ainsi rapprocher l'axe 38 de la poulie 39 à l'axe de la poulie supérieure 26 rendant ainsi libre la lame de découpe 44. La tête de découpe 1 par l'intermédiaire du centre de commande se présente face à l'équipement 73 comme illustré dans la figure 8. Cette position est signalée par le détecteur 78. La nouvelle lame de découpe 44 placée dans l'équipement 73 par l'intermédiaire des aimants 77 est donc prélevée par la tête de découpe 1 grâce à la mise en marche en sens inverse, du vérin 29 qui, éloignant l'axe de la poulie 39 de l'axe de la poulie supérieure 26 exerce une tension sur cette lame de découpe 44 la détachant des aimants 77. Le centre de commande 98 commande l'éloignement de la tête de découpe 1 ouverte de l'équipement 73 et la fermeture du couvercle 45 sur la paroi interne 23 de la partie 40 grâce au vérin de fonctionnement 49 qui opère dans le sens inverse de celui décrit. De cette façon, le poussoir 54 est déporté vers le haut grâce au fonctionnement du ressort 61.

**Revendications**

1. Dispositif de découpe automatique de feuilles de matière plastique utilisées notamment dans les vitrages feuilletés, par un détourage, ce dispositif comprenant une tête de découpe (1) munie d'un ruban (44) à bord tranchant en forme de lame de scie à ruban, caractérisé en ce que la tête de découpe (1) est montée sur un axe de rotation (3) horizontal, lui-même monté au bout d'une colonne verticale (5) montée tournant autour d'un axe vertical z, sur une colonne principale (6) pouvant se déplacer selon les trois axes cartésiens orthogonaux x, y, z, en étant montée coulissante verticalement selon l'axe z sur une structure (12) pouvant se déplacer selon les deux axes x et y, et en ce que l'ensemble du dispositif est commandé et contrôlé par des moyens électroniques et numériques (98).

2. Dispositif de découpe selon la revendication 1, caractérisé en ce que le ruban est porté par deux poulies dont une au moins possède un axe réglable permettant la régulation de la tension de la lame de découpe.

3. Dispositif de découpe selon la revendication 2, caractérisé en ce qu'il comprend des moyens de régulation comprenant des moyens élastiques (42) exerçant une force sur une poulie tendant à l'éloigner de l'autre.

4. Dispositif de découpe selon une des revendication 2 à 3, caractérisé par des moyens pour rapprocher les axes de ces deux poulies (39, 26) pour permettre l'extraction de la lame de découpe (44).

5. Dispositif de découpe selon la revendication 4, caractérisé par lesdits moyens d'approche comprenant un vérin (29) agissant sur les moyens (33) de positionnement de l'axe (38) d'une de ces poulies, en opposition à l'action de ces moyens élastiques (42).

6. Dispositif de découpe selon une des revendications 1 à 5, caractérisé en ce que la tête de découpe comprend une structure de support (24) qui constitue aussi une boîte renfermant ladite lame de découpe (44), cette boîte (24) présentant une ouverture (47) pour le libre passage d'une partie de la lame de découpe (44), qui prend contact avec le profil de l'élément à découper (86), ladite boîte (24) présentant une partie principale (40) en forme de conteneur et une partie (45) en forme de couvercle, cette partie (45) étant déplaçable grâce aux moyens (49) d'ouverture et de fermeture.

7. Dispositif de découpe selon la revendication 6, caractérisé en ce que lesdits moyens d'ouverture et de fermeture comprennent un vérin (49) porté par ladite partie principale (40) et qu'ils agissent sur les moyens mécaniques (54, 55, 56, 57, 58) de transformation d'un déplacement linéaire en une rotation, cette partie de fermeture (45) étant reliée à un élément (58) de ces moyens mécaniques soumis à ladite rotation.

8. Dispositif de découpe d'après une des revendications 1 à 7, caractérisé en ce qu'il comprend des moyens (73) de logement d'une lame de découpe de rechange (44), les moyens de commande (98) commandant automatiquement et périodiquement l'approche de cette structure de support (24) de ladite lame auxdits moyens de logement (73) de cette lame de découpe de rechange (44), et le chargement successif, en tension, sur ces moyens de déroulement (26-39).

9. Dispositif de découpe selon la revendication 8, caractérisé en ce qu'il comprend des moyens de logement (73) comprenant plusieurs éléments magnétiques (77) de soutien de ladite lame (44'), dans une configuration en forme d'anneau, apte à être chargée sur lesdits moyens de déroulement (26-39).

10. Dispositif de découpe selon une des revendications 8 à 9, caractérisé en ce qu'il comprend des moyens (83) d'affûtage desdits bords tranchants, les moyens de commande (98) commandant automatiquement et périodiquement l'approche de cette lame (44) auxdits moyens d'affûtage (83).

**Claims**

1. Automatic cutting device for sheets of plastics material, used notably in laminated panes, by a routing operation, this device comprising a cutting head (1) equipped with a band (44) having a cutting edge in the form of a blade of a band saw, characterized in that the cutting head (1) is mounted on a horizontal axis of rotation (3), itself mounted at the end of a vertical column (5) mounted rotatable about a vertical axis z on a principal column (6), capable of displacing along the three mutually perpendicular cartesian axes x, y, z by being mounted vertically slidable along the axis z on a structure (12) capable of moving along the two axes x and y, and in that the whole of the device is governed and controlled by electronic and numerical means (98).

2. Cutting device according to Claim 1, characterized in that the band is carried by two wheels, at least one of which possesses an adjustable axis enabling the tension of the cutting band to be regulated.

3. Cutting device according to Claim 2, characterized in that it comprises regulating means comprising elastic means (42) exerting a force upon one wheel biasing it away from the other wheel.

4. Cutting device according to one of Claims 2 to 3, characterized by means for bringing nearer together the axes of these two wheels, (39, 26) to allow the cutting blade (44) to be removed.

5. Cutting device according to Claim 4, characterized by said means for bringing nearer together comprising a jack (29) acting upon the means (33) for positioning the axis (38) of one of these wheels in opposition to the action of these elastic means (42).

6. Cutting device according to one of claims 1 to 5, characterized in that the cutting head comprises a support structure (24), which also constitutes a box housing said cutting blade (44), this box (24) having an opening (47) for the free passage of a part of the cutting blade (44) which makes contact with the profile of the element to be cut (86), said box (24) possessing a principal part (40) in the form of a container and a part (45) in the form of a lid, the latter part (45) being displaceable by the opening and closing means (49).

7. Cutting device according to Claim 6, characterized in that said opening and closing means comprise a jack (49) carried by said principal part (40) and that they act upon the mechanical means (54, 55, 56 57, 58) for converting a linear displacement into a rotation, this closure part (45) being connected to an element (58) of these mechanical means subjected to said rotation.

8. Cutting device according to one of Claims 1 to 7, characterized in that it comprises means (73) for seating a replacement cutting blade (44), the control means (98), automatically and periodically governing the approach of this support structure (24) for said blade to said seating means (73) for this replacement cutting blade (44), and the subsequent loading, in tension, onto these unwinding means (26-39).

9. Cutting device according to Claim 8, characterized in that it comprises seating means (73) comprising several magnetic elements (77) for supporting said blade (44') in a ring-shaped configuration, adapted to be loaded onto said unwinding means (26-39).

10. Cutting device according to one of Claims 8 to 9, characterized in that it comprises means (83) for sharpening said cutting edges, the control means (98) automatically and periodically governing the approach of this blade (44) to said sharpening means (83).

**Patentansprüche**

1. Vorrichtung zum automatischen Schneiden von insbesondere in Verbundglasscheiben verwendeten Kunststoffplatten durch Sägen, mit einem Schneidkopf (1), der ein Band (44) mit einer Schneidkante in Form eines Bandsägeblattes aufweist, dadurch gekennzeichnet, daß der Schneidkopf (1) auf einer horizontalen Rotationsachses (3), die sich am Ende einer um eine vertikale Achse z drehbaren vertikalen Säule (5) befindet, an einer Hauptsäule (6) angeordnet ist, die längs den drei kartesischen orthogonalen Achsen x, y und z verschiebbar ist, indem sie vertikal längs der Achse z auf einem Aufbau (12) verschiebbar angeordnet ist, der längs der beiden Achsen x und y verschiebbar ist, und daß die gesamte Vorrichtung mit Hilfe von elektronischen und numerischen Einrichtungen (98) gesteuert und überwacht wird.

2. Vorrichtung nach Anspruch 1, dadurch gekennzeichnet, daß das Band von zwei Antriebsscheiben gehalten wird, von denen wenigstens eine eine einstellbare Achse aufweist, mit der die Spannung des Schneidblatts regulierbar ist.

3. Vorrichtung nach Anspruch 2, dadurch gekennzeichnet, daß sie eine Regulierungseinrichtung mit einer elastischen Einrichtung (42) aufweist, die derart eine Kraft auf eine Antriebsscheibe ausübt, daß sie von der anderen weggedrückt wird.

4. Vorrichtung nach Anspruch 2 oder 3, gekennzeichnet durch eine Einrichtung zur Verkürzung des Abstandes der Achsen der beiden Antriebsscheiben (39, 26) zwecks Abnahme des Schneidblatts (44).

5. Vorrichtung nach Anspruch 4, dadurch gekennzeichnet, daß die Einrichtung zur Abstandsverkürzung einen Zylinder (29) umfaßt, der entgegen der Wirkung der elastischen Einrichtung (42) auf die Positioniereinrichtung (33) für die Achse (38) einer dieser Antriebsscheiben einwirkt.

6. Vorrichtung nach einem der Ansprüche 1 bis 5, dadurch gekennzeichnet, daß der Schneidkopf einen Stützrahmen (24) aufweist, der auch ein das Schneidblatt (44) aufnehmendes Gehäuse mit einer Öffnung (47) bildet, in der derjenige Teil des Schneidblatts (44) frei läuft, der mit dem Profil des zu schneidenden Gegenstandes (86) in Berührung kommt, wobei das Gehäuse (24) ein Hauptteil (40) in Form eines Kastens und ein Teil (45) in Form eines Deckels aufweist, das durch eine Öffnungs- und Schließeinrichtung (49) verschiebbar ist.

7. Vorrichtung nach Anspruch 6, dadurch gekennzeichnet, daß die Öffnungs- und Schließeinrichtung einen von dem Hauptteil (40) getragenen Zylinder (49) umfaßt und auf eine mechanische Einrichtung (54, 55, 56, 57, 58) zur Umwandlung einer Linearbewegung in eine Rotationsbewegung einwirkt, wobei das Schließteil .(45) mit einem der Rotation unterworfenen Element (58) der mechanischen Einrichtung verbunden ist.

8. Vorrichtung nach einem der Ansprüche 1 bis 7, dadurch gekennzeichnet, daß sie eine Einrichtung (73) zur Aufnahme eines Ersatzschneidblatts (44) umfaßt, wobei die Steuereinrichtung (98) automatisch und periodisch das Heranführen des Stützrahmens (24) des Schneidblatts an die Aufnahmeeinrichtung (73) des Ersatzschneidblatts (44) und das aufeinanderfolgende Laden unter Spannung auf die Einrichtung (26-39) steuert.

9. Vorrichtung nach Anspruch 8, dadurch gekennzeichnet, daß sie eine Aufnahmeeinrichtung (73) umfaßt, die mehrere Magnetelemente (77) in ringförmiger anordnung zur Halterung des Schneidblatts (44') und zum Beladen der Einrichtung (26-39) aufweist.

10. Vorrichtung nach Anspruch 8 oder 9, dadurch gekennzeichnet, daß sie eine Schärfeinrichtung (83) für die Schneidkanten aufweist, wobei die Steuereinrichtung (98) automatisch und periodisch das Heranführen des Schneidblatts (44) an die Schärfeinrichtung (83) steuern.

Fig.1

EP 0 210 095 B1

Fig. 2

EP 0 210 095 B1

Fig.3

Fig.4

Fig.6

3

Fig.5

Fig.7

Fig.8

EP 0 210 095 B1